## Europäisches Patentamt

## European Patent Office

## Office européen des brevets

(11) Veröffentlichungsnummer: **0 179 275**
**B1**

(12) **EUROPÄISCHE PATENTSCHRIFT**

(45) Veröffentlichungstag der Patentschrift:
**04.01.89**

(51) Int. Cl.⁴: **B23K 26/08**

(21) Anmeldenummer: **85111821.6**

(22) Anmeldetag: **18.09.85**

(54) **Einrichtung zur Ablenkung eines Lichtstrahls.**

(30) Priorität: **25.09.84 DE 3435167**

(43) Veröffentlichungstag der Anmeldung:
**30.04.86 Patentblatt 86/18**

(45) Bekanntmachung des Hinweises auf die Patenterteilung:
**04.01.89 Patentblatt 89/1**

(84) Benannte Vertragsstaaten:
**AT BE CH DE FR GB IT LI NL SE**

(56) Entgegenhaltungen:
**DE-A- 1 948 798**
**US-A- 3 612 814**
**US-A- 3 848 104**
**US-A- 3 902 036**

(73) Patentinhaber: **Siemens Aktiengesellschaft Berlin und München, Wittelsbacherplatz 2, D-8000 München 2(DE)**

(72) Erfinder: **Mattelin, Antoon, Dipl.-Ing., Leliestraat 6, B-8020 Oostkamp(BE)**
Erfinder: **Paquet, Bert, Eeksken 203, B-1890 Opwijk(BE)**

ACTORUM AG

## Beschreibung

Die Erfindung betrifft eine Einrichtung zur Ablenkung eines Lichtstrahls in zwei zueinander senkrechten Richtungen nach dem Oberbegriff des Anspruchs 1.

Derartige Einrichtungen mit einem ersten Ablenkspiegel für die horizontale Ablenkung des von einem Laser erzeugten Lichtstrahls und einem zweiten Ablenkspiegel für die vertikale Ablenkung des Lichtstrahls werden beispielsweise bei der Laserabtastung eines Objekts, bei der Bearbeitung eines Werkstücks mit einem Laserstrahl und insbesondere bei der Laser-Beschriftung eingesetzt. Bei der Laser-Beschriftung sind in dem Strahlengang des von einem Laser erzeugten Lichtstrahls nacheinander ein Fotoverschluß, die entsprechend der Beschriftungsaufgabe steuerbaren Ablenkspiegel und ein Objektiv angeordnet, welches den Lichtstrahl auf die Oberfläche eines zu beschriftenden Teiles fokussiert. Mit Hilfe einer derartigen Anordnung können dann Teile aus Metall, Keramik, Halbleitermaterialien und einer Vielzahl von Kunststoffen entsprechend der Beschriftungsaufgabe mit Buchstaben, Ziffern, Markierungen, Firmensymbolen oder grafischen Darstellungen beschriftet werden, wobei die Beschriftung in Gravierschrift, in Schmelzschrift oder in Verdampfungsschrift ausgeführt werden kann. Als Ablenkspiegel werden dabei Galvanometerspiegel mit kleinen, sehr leichten Spiegeln benutzt, die sich durch geringe Trägheitsmomente und eine geringe Reibung der beweglichen Teile auszeichnen und somit eine hohe Geschwindigkeit der Laser-Beschriftung zulassen.

In der US-PS 3 902 036 ist eine Einrichtung zur Ablenkung eines Laserstrahls in zwei zueinander senkrechten Richtungen dargestellt, bei welcher für die Ablenkung in beiden Richtungen nur ein einziger Galvanometerspiegel aufgezeigt ist. In der zugehörigen Beschreibung wird jedoch ausdrücklich betont, daß in der Praxis zwei Galvanometerspiegel verwendet werden und daß lediglich zur Vereinfachung der Zeichnung nur ein Galvanometerspiegel dargestellt wurde.

Aus der US-PS 3 848 104 ist eine Einrichtung zur Ablenkung eines Laserstrahls in zwei zueinander senkrechten Richtungen bekannt, wobei zwei Spindeln eingesetzt werden, deren Achsen senkrecht aufeinander stehen und die an einen einzigen Ablenkspiegel angelenkt sind. Des weiteren wird hierin beschrieben, daß eine erste Spindel über ein Gabelgelenk an den Ablenkspiegel angelenkt ist und die Drehzapfenachse des Gabelgelenkes und die Achse der ersten Spindel senkrecht aufeinander stehen.

Der Erfindung liegt die Aufgabe zugrunde, eine einfach aufgebaute Einrichtung zu schaffen, die aufbauend auf dem Stand der Technik nur geringe Trägheitsmomente und eine geringe Reibung der beweglichen Teile, sowie hohe Ablenkgeschwindigkeiten in beiden Richtungen ermöglicht.

Diese Aufgabe wird bei einer gattungsgemäßen Einrichtung durch die kennzeichnenden Merkmale des Anspruchs 1 gelöst.

Bei der erfindungsgemäßen Einrichtung trägt die erste Spindel die Gabel und den drehbar in der Gabel gelagerten Ablenkspiegel, während die zweite Spindel über einen Dreharm und einen rückseitig am Ablenkspiegel befestigten Mitnehmer an den Ablenkspiegel angelenkt ist. Zusätzlich muß dann aber noch der Mitnehmer in dem Dreharm um die Achse der ersten Spindel frei verschwenkbar geführt sein, da sonst eine voneinander unabhängige Betätigung beider Spindeln nicht gewährleistet wäre.

Die beweglichen Teile der Ablenkeinrichtung können problemlos so ausgestaltet werden, daß sich kleine Trägheitsmomente und eine geringe Reibung ergeben und somit hohe Ablenkgeschwindigkeiten erzielt werden können.

Wird eine erfindungsgemäß ausgestaltete Ablenkeinrichtung bei der Laserbeschriftung eingesetzt, so ergeben sich durch die Verwendung der kennzeichnenden Merkmale der Erfindung ganz besondere Vorteile. Gegenüber dem Stand der Technik ergeben sich bezüglich Qualität der Laserbeschriftung dadurch Verbesserungen, daß die erfindungsgemäße Ablenkeinrichtung geringe Trägheitsmomente und geringe Reibungswiderstände der beweglichen Teile aufweist. Dadurch können hohe Ablenkgeschwindigkeiten erzielt werden.

Bei einer bevorzugten Ausgestaltung der Erfindung ist die Spiegelfläche in der Ausgangsstellung des Ablenkspiegels zur Achse einer der beiden Spindeln um einen Winkel von ca. 45° geneigt. Im Hinblick darauf, daß bei einem Neigungswinkel von 90° eine Drehung der entsprechenden Spindel zu keiner Ablenkung des Lichtstrahls führen würde, ist ein derartiger Neigungswinkel von ca. 45° als optimal anzusehen. Ist dann zusätzlich noch die Drehzapfenachse des Gabelgelenks planparallel zur Spiegelfläche des Ablenkspiegels ausgerichtet, so können bei gleichen Drehwinkeln der beiden Spindeln proportionale Ablenkwinkel des Lichtstrahls in den jeweiligen Richtungen erzielt werden, wobei der proportionale Zusammenhang zwischen Drehwinkel der Spindel und Ablenkwinkel des Lichtstrahls in der einen Richtung doppelt so groß ist als in der anderen Richtung und eine einfache Kompensation durch eine entsprechende elektronische Steuerung der Antriebe ermöglicht wird.

Gemäß einer weiteren Ausgestaltung der Erfindung sind die Drehzapfen des Gabelgelenks an einer Halterung des Ablenkspiegels befestigt. Der Ablenkspiegel kann dann auf die Halterung aufgeklebt werden, was für eine Reduzierung der Trägheitsmomente der beweglichen Teile besonders zweckmäßig ist.

Im Hinblick auf eine möglichst geringe Reibung der beweglichen Teile ist es weiterhin zweckmäßig, wenn die Drehzapfen des Gabelgelenks über Wälzlager in der Gabel des Gabelgelenks gelagert sind.

Bei einer weiteren besonders bevorzugten Ausgestaltung der Erfindung ist der Mitnehmer in einem Schlitz des Dreharms geführt. Der Mitnehmer kann dann bei einer Verdrehung der ersten Spindel praktisch kräftefrei in Längsrichtung des Schlitzes gleiten und bei einer Drehung der zweiten Spindel diese Verdrehung praktisch spielfrei in Querrichtung des Schlitzes auf den Ablenkspiegel übertragen.

Eine besonders einfache Ausführung der Anlenkung der zweiten Spiegel an den Ablenkspiegel wird dadurch erreicht, daß der Mitnehmer senkrecht zur Spiegelfläche des Ablenkspiegels ausgerichtet ist und daß der Dreharm um einen Winkel von ca. 45° zur Achse der zweiten Spindel geneigt ist.

Der Dreharm kann aber auch um einen Winkel von ca. 90° zur Achse der zweiten Spindel geneigt sein, wobei der Schlitz in einen parallel zur Achse der zweiten Spindel ausgerichteten Schenkel des Dreharms eingebracht ist. Der Mitnehmer kann in diesem Falle dann entweder gerade ausgebildet sein und um einen Winkel von ca. 45° zur Spiegelfläche des Ablenkspiegels ausgerichtet sein oder in seinem Befestigungsbereich senkrecht zur Spiegelfläche des Ablenkspiegels ausgerichtet und durch eine zweifache Abbiegung in dem in dem Schlitz geführten Bereich um einen Winkel von ca. 45° zur Spiegelfläche des Ablenkspiegels geneigt sein. Bei beiden Varianten ist dabei eine besonders große Bewegungsfreiheit des in der Ausgangsstellung gegenüber der Gabel des Gabelgelenks um 90° versetzt angeordneten Dreharms gewährleistet.

Im Hinblick auf eine möglichst geringe Reibung zwischen Dreharm und Mitnehmer ist es auch besonders günstig, wenn der Schlitz kreisbogenförmig um die Achse der ersten Spindel verläuft. Durch diese Maßnahme kann eine in Längsrichtung des Mitnehmers gesehene Relativbewegung zwischen Dreharm und Mitnehmer vollständig verhindert werden.

Weiterhin hat es sich als besonders günstig erwiesen, wenn der Mitnehmer aus einem prismatischen Rundstab gebildet ist. Zur Verringerung der Reibung kann der Mitnehmer dann besonders einfach über ein Wälzlager in dem Schlitz gelagert werden.

Gemäß einer weiteren bevorzugten Ausgestaltung der erfindungsgemäßen Einrichtung ist vorgesehen, daß die erste Spindel und die zweite Spindel durch zugeordnete Galvanometerantriebe verdrehbar sind. Derartige Galvanometerantriebe zeichnen sich durch eine besonders hohe Empfindlichkeit und eine besonders hohe Genauigkeit aus. Die Galvanometerantriebe werden dann vorzugsweise an einem Gehäuse angebracht, welches einen Laseranschlußtubus und einen senkrecht dazu ausgerichteten Objektivtubus besitzt. Durch die Unterbringung der gesamten Ablenkeinrichtung in einem derartigen Gehäuse kann dann bei entsprechender Komplettierung durch einen Laser und ein Objektiv eine besonders kompakte Baueinheit zur Laser-Beschriftung erhalten werden.

Im folgenden werden Ausführungsbeispiele der Erfindung anhand der Zeichnung näher erläutert.

Es zeigen:

Figur 1 den Einsatz einer erfindungsgemäßen Einrichtung zur Ablenkung eines Lichtstrahls bei der Laser-Beschriftung in stark vereinfachter schematischer Darstellung,

Figur 2 eine erste Ausführungsform einer erfindungsgemäßen Einrichtung zur Ablenkung eines Lichtstrahls,

Figur 3 eine zweite Ausführungsform einer erfindungsgemäßen Einrichtung zur Ablenkung eines Lichtstrahls,

Figur 4 eine dritte Ausführungsform einer erfindungsgemäßen Einrichtung zur Ablenkung eines Lichtstrahls,

Figur 5 eine Variante des bei der Einrichtung nach den Figuren 3 oder 4 verwendeten Dreharms,

Figur 6 eine Wälzlagerung des Mitnehmers in dem Schlitz des Dreharms nach Figur 5 und

Figur 7 die Anordnung einer Einrichtung nach Figur 2 in einer Baueinheit zur Laser-Beschriftung.

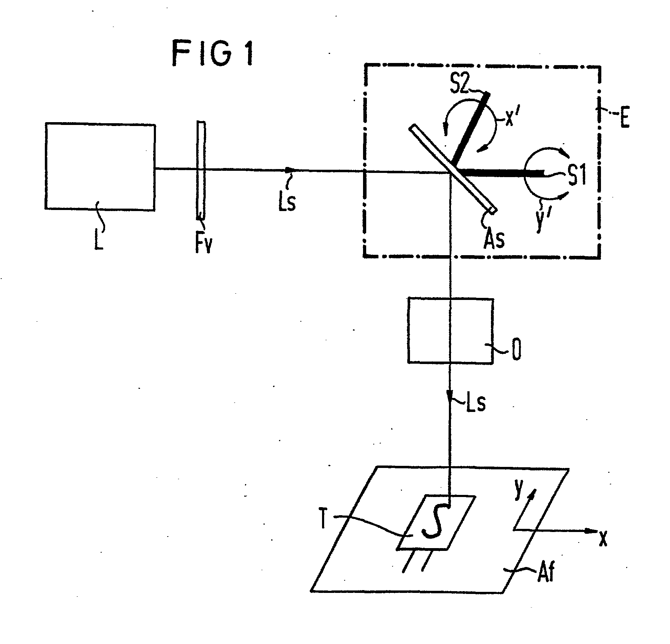

Figur 1 zeigt eine Einrichtung zur Laser-Beschriftung eines auf einer Arbeitsfläche Af angeordneten Teiles T, bei welchem es sich im dargestellten Fall um einen Kondensator handelt. Die Einrichtung umfaßt einen Laser L, welcher einen Lichtstrahl Ls erzeugt, in dessen Strahlengang aufeinanderfolgend ein Fotoverschluß Fv, eine Einrichtung E zur Ablenkung des Lichtstrahls Ls in zwei zueinander senkrechten Richtungen x und y und ein Objektiv O angeordnet sind, wobei das Objektiv O den Lichtstrahl Ls auf die Oberfläche des zu beschriftenden Teiles T fokussiert. Die Einrichtung E besitzt einen einzigen Ablenkspiegel As, welcher den Lichtstrahl Ls entsprechend der jeweiligen Beschriftungsaufgabe in der horizontalen Richtung x und der vertikalen Richtung y ablenkt, wobei die beiden Ablenkrichtungen durch ein in der Arbeitsfläche Af angedeutetes ebenes kartesisches x-, y-Koordinatensystem definiert sind. An den Ablenkspiegel As sind zwei senkrecht aufeinanderstehende Spindeln S1 und S2 angelenkt, was in Figur 1 jedoch nur rein schematisch dargestellt ist. Die erste drehbare Spindel S1 bewirkt bei einer Verdrehung in Richtung des Doppelpfeiles y' eine Ablenkung des Lichtstrahls Ls in der vertikalen Richtung y, während die zweite drehbare Spindel S2 bei einer Verdrehung in Richtung des Doppelpfeiles x' eine Ablenkung des Lichtstrahls Ls in der horizontalen Richtung x bewirkt.

Die in Figur 1 nicht dargestellten Antriebe der Spindeln S1 und S2 können beispielsweise durch einen Prozeßrechner oder durch einen Mikroprozessor entsprechend der jeweiligen Beschriftungsaufgabe gesteuert werden, wobei der Prozeßrechner bzw. Mikroprozessor auch die Steuerung des Fotoverschlusses Fv übernehmen kann. Wie es in Figur 1 angedeutet ist, kann das Teil T beispielsweise durch entsprechende Verdrehungen der Spindeln S1 und S2 mit den Buchstaben "S" beschriftet werden.

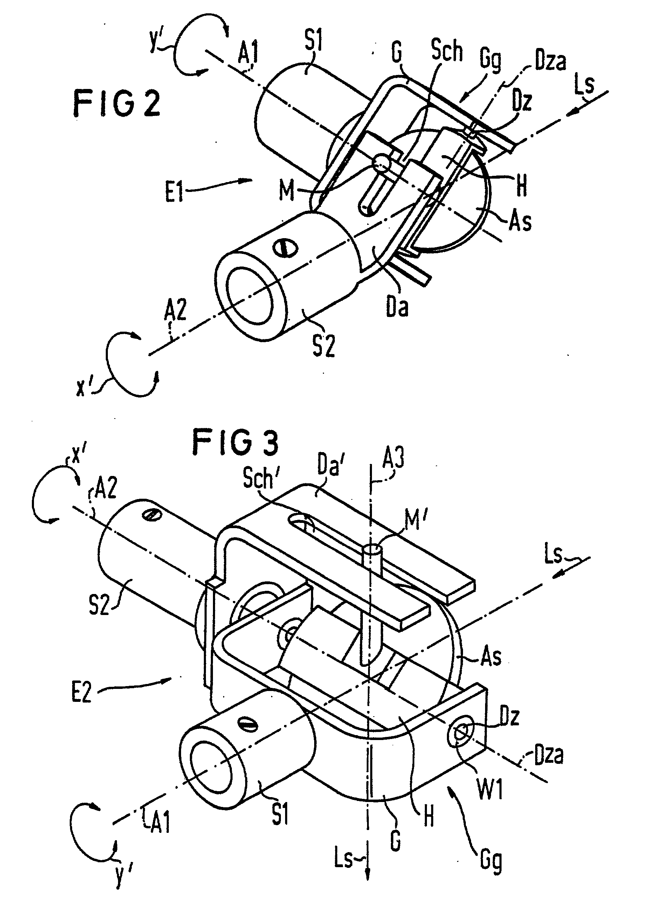

Figur 2 zeigt eine perspektivische Darstellung einer ersten Ausführungsform einer insgesamt mit E1 bezeichneten Einrichtung zur Ablenkung eines Lichtstrahls Ls. Die als Hohlwellenstummel ausgebildete erste drehbare Spindel S1 trägt eine Gabel G, in welcher eine Halterung H über Drehzapfen Dz drehbar gelagert ist. Auf die Halterung H ist ein kreisförmiger Ablenkspiegel As mit seiner Rückseite aufgeklebt. Die Gabel G und die Halterung H mit den beiden Drehzapfen Dz bilden ein mit Gg bezeichnetes Gabelgelenk, welches so ausgebildet ist, daß die Achse A1 der ersten Spindel S1 und die Drehzapfenachse Dza senkrecht aufeinanderstehen.

Die ebenfalls als Hohlwellenstummel ausgebildete zweite drehbare Spindel S2 ist so ausgerichtet, daß ihre Achse A2 senkrecht auf der Achse A1 steht und genau durch den Schnittpunkt der Achse A1 und der Drehzapfenachse Dza geht. Die Anlenkung des Ablenkspiegels As an die zweite Spindel S2 erfolgt über einen Dreharm Da und einen an der Halterung H des Ablenkspiegels As befestigten Mitnehmer M. Bei dem Dreharm Da handelt es sich um einen Flachstab, der mit dem vorderen Ende der zweiten Spindel S2 fest verbunden ist und um einen Winkel von 45° zur Achse A2 der zweiten Spindel S2 geneigt ist. In den Dreharm Da ist ein zum vorderen Ende hin offener Schlitz Sch eingebracht, dessen Mittelebene in einer durch die Achse A2 gehenden Ebene liegt. Der in dem Schlitz Sch geführte Mitnehmer M ist aus einem geraden prismatischen Rundstab gebildet, dessen Durchmesser nur geringfügig kleiner ist als die Breite des Schlitzes Sch. Im übrigen ist der Mitnehmer M senkrecht zur Spiegelfläche des Ablenkspiegels As derart ausgerichtet, daß seine Längsachse durch den gemeinsamen Schnittpunkt der Achse A1 der Achse A2 und der Drehzapfenachse Dza geht.

Der abzulenkende Lichtstrahl Ls ist so ausgerichtet, daß er in Richtung der Achse A2 im Schnittpunkt der Achsen A1 und A2 auf die Spiegelfläche des Ablenkspiegels As auftrifft und in der Ausgangsstellung um einen Winkel von 90° nach unten abgelenkt wird. Bei einer Verdrehung der ersten Spindel S1 in Richtung des Doppelpfeiles y' ergibt sich eine entsprechende Auslenkung in y-Richtung (vgl. Figur 1), wobei sich der Mitnehmer M in dem Schlitz Sch bewegt ohne auf die Spindel S2 ein Drehmoment zu übertragen. Bei einer Verdrehung der zweiten Spindel S2 in Richtung des Doppelpfeiles x' ergibt sich über den Dreharm Da und den Mitnehmer M eine Drehung des Ablenkspiegels As um die Drehzapfenachse Dza mit einer entsprechenden Auslenkung des Lichtstrahls Ls in x-Richtung (vgl. Figur 1), wobei auch bei diesem Vorgang kein Drehmoment auf die Spindel S1 übertragen wird. Eine gleichzeitige Verdrehung der Spindeln S1 und S2 führt zu entsprechenden x-, y-Kurven in der Ebene der Arbeitsfläche Af (vgl. Figur 1).

Figur 3 zeigt eine perspektivische Darstellung einer zweiten Ausführungsform einer insgesamt mit E2 bezeichneten Einrichtung zur Ablenkung eines Lichtstrahls Ls. Dabei erfolgt die Anlenkung der ersten Spindel S1 an den Ablenkspiegel As auf die gleiche Weise wie bei der in Figur 2 dargestellten ersten Ausführungsform, wobei in Figur 3 zusätzlich jedoch noch zu erkennen ist, daß die Drehzapfen Dz über Wälzlager W1 in der Gabel G des Gabelgelenks Gg gelagert sind. Bei den beiden Wälzlagern W1 handelt es sich um sog. Miniaturkugellager mit einem radialen Spiel von weniger als 2 μm.

Die Anlenkung der zweiten Spindel S2 an den Ablenkspiegel As erfolgt über einen Dreharm Da' und einen an der Halterung H des Ablenkspiegels As befestigten Mitnehmer M'. Bei dem Dreharm Da' handelt es sich um einen abgewinkelten Flachstab, der mit dem vorderen Ende der zweiten Spindel S2 fest verbunden ist und in diesem Befestigungsbereich um einen Winkel von 90° zur Achse A2 geneigt ist. In dem parallel zur Achse A2 verlaufenden Schenkel des Dreharms Da' ist ein zum vorderen Ende hin offener Schlitz Sch' eingebracht, dessen Mittelebene in einer durch die Achse A2 gehenden Ebene liegt. Der in dem Schlitz Sch' geführte Mitnehmer M' ist aus einem geraden prismatischen Rundstab gebildet, dessen Durchmesser nur geringfügig kleiner ist als die Breite des Schlitzes Sch'. Im übrigen ist der Mitnehmer M' um einen Winkel von 45° zur Spiegelfläche des Ablenkspiegels As derart ausgerichtet, daß seine Längsachse A3 durch den gemeinsamen Schnittpunkt der Achse A1, der Achse A2 und der Drehzapfenachse Dza geht.

Der abzulenkende Lichtstrahl Ls ist so ausgerichtet, daß er in Richtung der Achse A2 im Schnittpunkt der Achsen A1 und A2 auf die Spiegelfläche des Ablenkspiegels As auftrifft und in der Ausgangsstellung um einen Winkel von 90° nach unten abgelenkt wird. Verdrehungen der Spindeln S1 und S2 in Richtung der Doppelpfeile x' bzw. y' führen zu entsprechenden Auslenkungen des Lichtstrahls Ls in der x-Richtung bzw. y-Richtung (vgl. Figur 1).

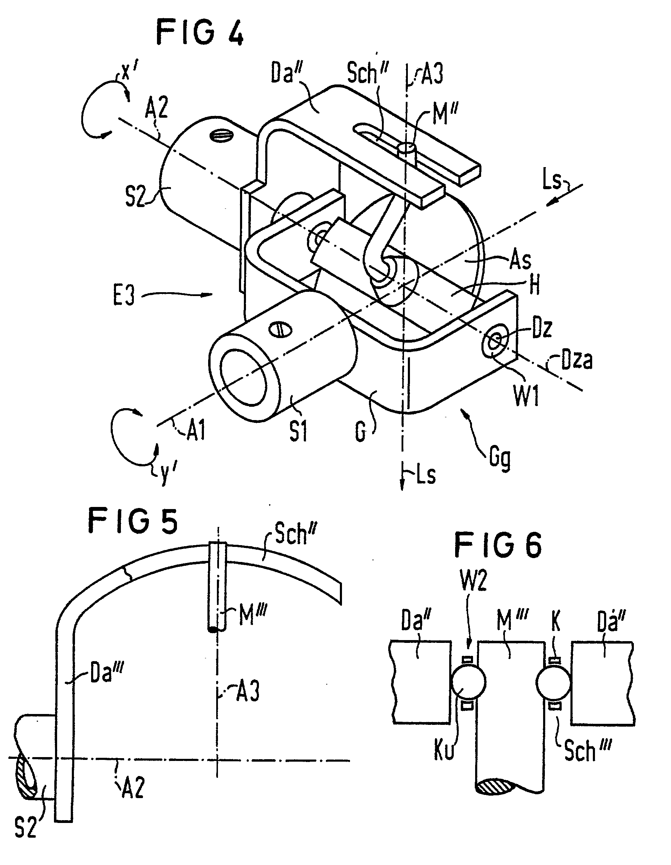

Figur 4 zeigt eine perspektivische Darstellung einer dritten Ausführungsform einer insgesamt mit E3 bezeichneten Einrichtung zur Ablenkung eines Lichtstrahls Ls. Diese dritte Ausführungsform E3 entspricht weitgehend der in Figur 3 dargestellten zweiten Ausführungsform E2. Der einzige Unterschied liegt in der Form des Mitnehmers M'', welcher in dem Schlitz Sch'' des hier mit Da'' bezeichneten Dreharms geführt ist. Der aus einem prismatischen Rundstab gebildete Mitnehmer M'' ist im Bereich seiner Befestigung an der Halterung H des Ablenkspiegels As senkrecht zur Spiegelfläche ausgerichtet und dann zweifach derart abgebogen, daß sein in dem Schlitz Sch'' geführter Bereich um einen Winkel von 45° zur Spiegelfläche des Ablenkspiegels As geneigt ist. In seinem in dem Schlitz Sch'' geführten Bereich verläuft die Längsachse A3 des Mitnehmers M'' so, daß ihre Verlängerung durch den gemeinsamen Schnittpunkt der Achse A1, der Achse A2 und der Drehzapfenachse Dza geht. Im übrigen entspricht die Funktionsweise der in Figur 4 dargestellten dritten Einrichtung E3 derjenigen der in Figur 3 dargestellten zweiten Einrichtung E2.

Die Figuren 5 und 6 zeigen eine Variante mit einer besonders reibungsarmen Führung eines mit M''' bezeichneten Mitnehmers in dem Schlitz Sch''' eines mit Da''' bezeichneten Dreharms. Der Schenkel des Dreharms Da''' ist gemäß Figur 5 so abgebogen, daß der Schlitz Sch''' kreisbogenförmig um die hier nicht gezeigte Achse A1 (vgl. Figuren 3 und 4) verläuft. Diese Achse A1 geht senkrecht zur Zeichnungsebene durch den Schnittpunkt der Achse A2 der ersten Spindel S1 und der Achse A3 des Mitnehmers M'''. Durch den kreisbogenförmigen Verlauf des Schlitzes Sch''' ergeben sich bei einer Drehung der ersten Spindel S1 (vgl. Figuren 3 und 4) keine in Längsrichtung der Achse A3 wirkenden Reibungskräfte zwischen dem Mitnehmer M''' und dem Dreharm Da'''. Die senkrecht zur Achse A3 wirkenden Reibungskräfte können gemäß Figur 6 durch ein Wälzlager W2 reduziert werden. Die in einem Käfig K gehaltenen Kugeln Ku des Wälzlagers W2 wälzen sich auf der Außenseite an der Wandung des Schlit-

zes Sch''' und auf der Innenseite an einer umlaufenden Nut des Mitnehmers M''' ab. Das radiale Spiel des Wälzlagers W2 beträgt dabei weniger als 2 µm.

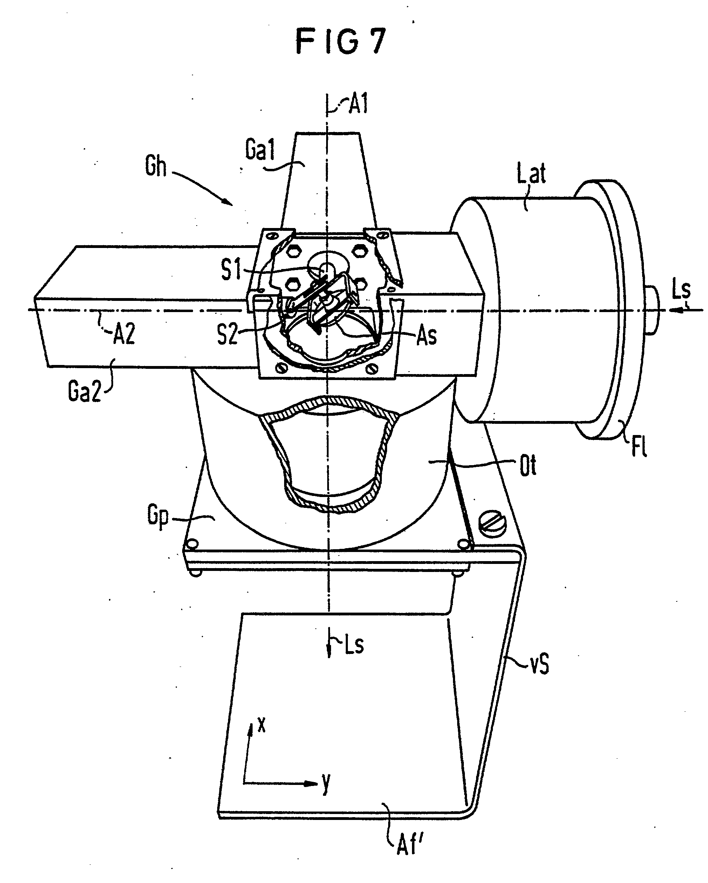

Figur 7 zeigt in perspektivischer Darstellung eine Baueinheit für die Laser-Beschriftung, in deren mit Gh bezeichneten Gehäuse die in Figur 2 dargestellte Einrichtung E2 eingebaut ist. Die erste Spindel S1 ist an einen an das Gehäuse Gh angeflanschten Galvanometerantrieb Ga1 angeschlossen, während die zweite Spindel S2 an einen ebenfalls an das Gehäuse Gh angeflanschten Galvanometerantrieb Ga2 angeschlossen ist. Das Gehäuse Gh besitzt ferner einen Laseranschlußtubus Lat und einen Objektivtubus Ot. Der Laseranschlußtubus Lat trägt einen Flansch F1, an welchem ein Laser befestigt werden kann. Der von diesem Laser erzeugte Lichtstrahl Ls fällt dann in Richtung der Achse A2 auf den Ablenkspiegel As und wird von diesem durch den Objektivtubus Ot und das darin angeordnete Objektiv auf die mit Af' bezeichnete Arbeitsfläche gelenkt, welche über einen vertikalen Schenkel vS mit der horizontalen Grundplatte Gp des Objektivtubus Ot verbunden ist. Durch die beispielsweise von einem Mikroprozessor gesteuerte Betätigung der Galvanometerantriebe Ga1 und Ga2 wird dann der Lichtstrahl Ls entsprechend der jeweiligen Beschriftungsaufgabe in der y-Richtung und der x-Richtung abgelenkt.

**Patentansprüche**

1. Einrichtung zur Ablenkung eines Lichtstrahls (Ls) in zwei zueinander senkrechten Richtungen (x, y), wobei die Ablenkung in jeder der beiden Richtungen (x, y) unabhängig voneinander durch die Verdrehung einer mit einem Ablenkspiegel (As) verbundenen Spindel (S1, S2) steuerbar ist, die zwei Spindeln (S1, S2) mit senkrecht aufeinanderstehenden Achsen (A1, A2) an einem einzigen Ablenkspiegel (As) angelenkt sind, die erste Spindel (S1) über ein Gabelgelenk (Gg) an den Ablenkspiegel (As) angelenkt ist und die Drehzapfenachse (Dza) des Gabelgelenkes (Gg) und die Achse (A1) der ersten Spindel (S1) senkrecht aufeinanderstehen, dadurch gekennzeichnet, daß
a) die zweite Spindel (S2) über einen Dreharm (Da, Da', Da'', Da''') und einen rückseitig am Ablenkspiegel (As) befestigten Mitnehmer (M, M', M'', M''') an den Ablenkspiegel (As) angelenkt ist,
b) der Mitnehmer (M, M', M'', M''') in dem Dreharm (Da, Da', Da'') um die Achse (A1) der ersten Spindel (S1) frei verschwenkbar geführt ist.

2. Einrichtung nach Anspruch 1, dadurch gekennzeichnet, daß die Spiegelfläche in der Ausgangsstellung des Ablenkspiegels (As) zur Achse (A1, A2) einer der beiden Spindeln (S1, S2) um einen Winkel von ca. 45° geneigt ist.

3. Einrichtung nach Anspruch 1 oder 2, dadurch gekennzeichnet, daß die Drehzapfenachse (Dza) des Gabelgelenks (Gg) planparallel zur Spiegelfläche des Ablenkspiegels (As) ausgerichtet ist.

4. Einrichtung nach Anspruch 3, dadurch gekennzeichnet, daß die Drehzapfen (Dza) des Gabelgelenks (Gg) an einer Halterung (H) des Ablenkspiegels (As) befestigt sind.

5. Einrichtung nach einem der vorhergehenden Ansprüche, dadurch gekennzeichnet, daß die Drehzapfen (Dza) des Gabelgelenks (Gg) über Wälzlager (W1) in der Gabel (G) des Gabelgelenks (Gg) gelagert sind.

6. Einrichtung nach einem der vorhergehenden Ansprüche, dadurch gekennzeichnet, daß der Mitnehmer (M; M'; M''; M''') in einem Schlitz (Sch; Sch'; Sch''; Sch''') des Dreharms (Da; Da'; Da''; Da''') geführt ist.

7. Einrichtung nach Anspruch 6, dadurch gekennzeichnet, daß der Mitnehmer (M) senkrecht zur Spiegelfläche des Ablenkspiegels (As) ausgerichtet ist und daß der Dreharm (Da) um einen Winkel von ca. 45° zur Achse (A2) der zweiten Spindel (S2) geneigt ist.

8. Einrichtung nach Anspruch 6, dadurch gekennzeichnet, daß der Dreharm (Da'; Da'') um einen Winkel von ca. 90° zur Achse (A2) der zweiten Spindel (S2) geneigt ist und daß der Schlitz (Sch'; Sch'') in einen parallel zur Achse (A2) der zweiten Spindel (S2) ausgerichteten Schenkel des Dreharms (Da'; Da'') eingebracht ist.

9. Einrichtung nach Anspruch 8, dadurch gekennzeichnet, daß der Mitnehmer (M') gerade ausgebildet und um einen Winkel von ca. 45° zur Spiegelfläche des Ablenkspiegels (As) ausgerichtet ist.

10. Einrichtung nach Anspruch 8, dadurch gekennzeichnet, daß der Mitnehmer (M'') in seinem Befestigungsbereich senkrecht zur Spiegelfläche des Ablenkspiegels (As) ausgerichtet ist und durch eine zweifache Abbiegung in dem in dem Schlitz (Sch'') geführten Bereich um einen Winkel von ca. 45° zur Spiegelfläche des Ablenkspiegels (As) geneigt ist.

11. Einrichtung nach einem der Ansprüche 6 bis 10, dadurch gekennzeichnet, daß der Schlitz (Sch''') kreisbogenförmig um die Achse (A1) der ersten Spindel (S1) verläuft.

12. Einrichtung nach einem der Ansprüche 6 bis 11, dadurch gekennzeichnet, daß der Mitnehmer (M; M'; M'') aus einem prismatischen Rundstab gebildet ist.

13. Einrichtung nach einem der Ansprüche 6 bis 12, dadurch gekennzeichnet, daß der Mitnehmer (M''') über ein Wälzlager (W2) in dem Schlitz (Sch''') gelagert ist.

14. Einrichtung nach einem der vorhergehenden Ansprüche, dadurch gekennzeichnet, daß die erste Spindel (S1) und die zweite Spindel (S2) durch zugeordnete Galvanometerantriebe (Ga1, Ga2) verdrehbar sind.

15. Einrichtung nach Anspruch 14, dadurch gekennzeichnet, daß die Galvanometerantriebe (Ga1, Ga2) an einem Gehäuse (Gh) angebracht sind, welches einen Laseranschlußtubus (Lat) und einen senkrecht dazu ausgerichteten Objektivtubus (Ot) besitzt.

**Claims**

1. Appliance for deviating a light beam (Ls) in two mutually perpendicular directions (x; y), the deviation in each of the two directions (x; y) being controllable independently of one another by the rotation of a spindle (S1, S2) connected to a deviating mirror (As), the two spindles (S1, S2) with mutually perpendicular axes (A1, A2) being articulated to a single deviating mirror (As), the first spindle (S1) being articulated to the deviating mirror (As) via a fork linkage (Gg), and the pivot pin axis (Dza) of the fork linkage (Gg) and the axis (A1) of the first spindle (S1) being mutually perpendicular, characterized in that

a) the second spindle (S2) is articulated to the deviating mirror (As) via a pivot arm (Da; Da'; Da"; Da''') and a drive member (M; M'; M"; M''') secured to the deviating mirror (As) at the rear surface,

b) the drive member (M; M'; M"; M''') is guided in the pivot arm (Da; Da'; Da") so as to be freely pivotable about the axis (A1) of the first spindle (S1).

2. Appliance according to Claim 1, characterized in that in the starting position of the deviating mirror (As), the mirror surface is inclined to the axis (A1, A2) of one of the two spindles (S1, S2) at an angle of approximately 45°.

3. Appliance according to Claim 1 or 2, characterized in that the pivot pin axis (Dza) of the fork linkage (Gg) is oriented so as to be plane-parallel to the mirror surface of the deviating mirror (As).

4. Appliance according to Claim 3, characterized in that the pivot pins (Dza) of the fork linkage (Gg) are secured to a mounting (H) of the deviating mirror (As).

5. Appliance according to one of the preceding claims, characterized in that the pivot pins (Dza) of the fork linkage (Gg) are mounted by means of rolling bearings (W1) in the fork (G) of the fork linkage (Gg).

6. Appliance according to one of the preceding claims, characterized in that the drive member (M; M'; M"; M''') is guided in a slot (Sch; Sch'; Sch"; Sch''') of the pivot arm (Da; Da'; Da"; Da''').

7. Appliance according to Claim 6, characterized in that the drive member (M) is oriented so as to be perpendicular to the mirror surface of the deviating mirror (As) , and in that the pivot arm (Da) is inclined to the axis (A2) of the second spindle (S2) at an angle of approximately 45°.

8. Appliance according to Claim 6, characterized in that the pivot arm (Da'; Da") is inclined to the axis (A2) of the second spindle (S2) at an angle of approximately 90°, and in that the slot (Sch'; Sch") is introduced into a limb of the pivot arm (Da'; Da"), which limb is oriented parallel to the axis (A2) of the second spindle (S2).

9. Appliance according to Claim 8, characterized in that the drive member (M') is designed so as to be straight and is oriented at an angle of approximately 45° to the mirror surface of the deviating mirror (As).

10. Appliance according to Claim 8, characterized in that the drive member (M") is oriented, in its securing region perpendicular to the mirror surface of the deviating mirror (As) and is inclined, by means of a double bend in the region guided in the slot (Sch"), at an angle of approximately 45° to the mirror surface of the deviating mirror (As).

11. Appliance according to one of Claims 6 to 10, characterized in that the slot (Sch''') extends in a circular arc shape about the axis (A1) of the first spindle (S1).

12. Appliance according to one of Claims 6 to 11, characterized in that the drive member (M; M'; M") is formed from a prismatic round bar.

13. Appliance according to one of Claims 6 to 12, characterized in that the drive member (M''') is mounted by means of a rolling bearing (W2) in the slot (Sch''').

14. Appliance according to one of the preceding claims, characterized in  that the first spindle (S1) and the second spindle (S2) are rotatable by associated galvanometer drives (Ga1, Ga2).

15. Appliance according to Claim 14, characterized in that the galvanometer drives (Ga1, Ga2) are fitted to a housing (Gh), which possesses a laser connecting tube (Lat) and an objective tube (Ot) oriented perpendicular thereto.

**Revendications**

1. Dispositif pour dévier un rayon lumineux (Ls) suivant deux directions (x; y) faisant un angle droit l'une avec l'autre, les déviations suivant chacune des deux directions (x; y) étant susceptibles d'être commandées indépendamment l'une de l'autre, par la rotation d'une broche (S1, S2) et les deux broches (S1, S2) étant articulés par des axes (A1, A2) perpendiculaires entre eux à un seul miroir de déviation (As), alors que la première broche (S1) est articulée au miroir (As) par une articulation à fourche (Gg) et que l'axe (Dza) des tourillons de l'articulation à fourche (Gg) et l'axe (A1) de la première broche (S1) font un angle droit entre eux, caractérisé en ce que

a) la seconde broche (S2) est articulée au miroir de déviation (As) par l'intermédiaire d'un bras de rotation (Da; Da'; Da"; Da''') et un élément d'entraînement (M; M'; M"; M''') fixé à la face arrière du miroir (As) et

b) l'élément d'entraînement (M; M'; M"; M''') est guidé dans le bras de rotation (Da; Da'; Da") de façon à pouvoir pivoter librement autour de l'axe (A1) de la première broche (S1).

2. Dispositif selon la revendication 1, caractérisé en ce que la surface réfléchissante est inclinée d'un angle d'environ 45° sur l'axe (A1, A2) d'une des deux broches (S1, S2) à la position de départ du miroir de déviation (As).

3. Dispositif selon la revendication 1 ou 2, caractérisé en ce que l'axe (Dza) des tourillons de l'articulation à fourche (Gg) est parallèle à la surface réfléchissante du miroir de déviation (As).

4. Dispositif selon la revendication 3, caractérisé en ce que les tourillons (Dza) de l'articulation à fourche (Gg) sont fixés à un support (H) du miroir de déviation (As).

5. Dispositif selon une des revendications précédentes, caractérisé en ce que les tourillons (Dza) de l'articulation à fourche (Gg) sont montés dans la fourche (G) de l'articulation à fourche (Gg) par des roulements (W1).

6. Dispositif selon une des revendications précédentes, caractérisé en ce que l'élément d'entraînement (M; M'; M"; M''') est guidé dans une fente (Sch; Sch'; Sch"; Sch'") du bras de rotation (Da; Da'; Da"; Da'").

7. Dispositif selon la revendication 6, caractérisé en ce que l'élément d'entraînement (M) est orienté perpendiculairement â la surface réfléchissante du miroir de déviation (As) et que le bras de rotation (Da) est incliné d'un angle d'environ 45° sur l'axe (A1) de la seconde broche (S2).

8. Dispositif selon la revendication 6, caractérisé en ce que le bras de rotation (Da'; DA") est incliné d'un angle d'environ 90° sur l'axe (A2) de la seconde broche (S2) et que la fente (Sch'; Sch") est ménagée dans une branche du bras de rotation (Da'; DA") orientée parallèle à l'axe (A2) de la seconde broche (S2).

9. Dispositif selon la revendication 8, caractérisé en ce que l'élément d'entraînement (M') est droit et est orienté sous un angle d'environ 45° par rapport à la surface réfléchissante du miroir de déviation (As).

10. Dispositif selon la revendication 8, caractérisé en ce que l'élément d'entraînement (M") est orienté perpendiculairement à la surface réfléchissante du miroir de déviation (As) par sa partie de fixation et est orienté, par suite d'une double courbure, sous un angle d'environ 45° par rapport à la surface réfléchissante du miroir (As) par sa partie guidée dans la fente (Sch").

11. Dispositif selon une des revendications 8 à 10, caractérisé en ce que la fente (Sch'") s'étend en arc de cercle autour de l'axe (A1) de la première broche (S1).

12. Dispositif selon une des revendications 6 à 11, caractérisé en ce que l'élément d'entraînement (M; M'; M") est formé d'un barreau prismatique de section circulaire.

13. Dispositif selon une des revendications 6 à 12, caractérisé en ce que l'élément d'entraînement (M'") est monté dans la fente (Sch'") par un roulement (W2).

14. Dispositif selon une des revendications précédentes, caractérisé en ce que la première broche (S1) et la seconde broche (S2) peuvent être entraînées en rotation par des commandes de galvanomètre (Ga1, Ga2) coordonnées.

15. Dispositif selon la revendication 14, caractérisé en ce que les commandes de galvanomètre (Ga1, Ga2) sont disposées sur un boîtier (Gh) qui possède un tube (Lat) pour le raccordement d'un laser et un tube d'objectif (Lot) orienté perpendiculairement à ce tube de raccordement.

# FIG 1

FIG 2

FIG 3

# FIG 4

# FIG 5

# FIG 6

# FIG 7